# EUROPEAN PATENT SPECIFICATION

(11) **EP 1 082 538 B1**
(45) Date of publication and mention of the grant of the patent: **19.03.2003**
(21) Application number: 99917745.4
(22) Date of filing: 19.05.1999
(51) Int. Cl.: F03B 3/12, B23Q 5/06, B25F 5/00

(54) **HYDRAULIC MOTOR**
HYDRAULISCHER MOTOR
MOTEUR HYDRAULIQUE

(30) Priority: 22.05.1998 CZ 808198
(43) Date of publication of application: 14.03.2001
(73) Proprietor: Sedlacek, Miroslav, 150 00 Praha 5 (CZ); Hostin, Stanislav, 851 03 Bratislava (SK)
(72) Inventor: Sedlacek, Miroslav, 150 00 Praha 5 (CZ); Hostin, Stanislav, 851 03 Bratislava (SK)
(74) Representative: Hano, Christian, Dipl.-Ing.
(86) International application number: CZ9900013
(87) International publication number: WO99061790

(56) References cited:
- EP-A- 0 240 093
- WO-A-98/17910
- FR-A- 542 461
- FR-A- 2 662 104
- US-A- 2 536 595
- US-A- 4 008 774

## Description

### Technical Field

The invention relates to a hydraulic motor, especially for driving of rotating tools, consisting of a chamber, provided with an inlet for supplying fluid, and with at least one outlet hole, before which, on a holding device, a rolling rotor is seated, the rolling rotor is formed by a body of rotational shape.

### Background Art

Many devices exist where hydraulic motors are used to drive rotating equipment or tools. It is advantageous, to use normal water-supply piping as a source of pressure fluid for manual and mobile equipment. As a hydraulic motor for this type of equipment a Pelton turbine and its modification and/or various modification of waterwheel are mostly used. Their purpose is to transform the pressure and kinetic energy of water, supplied by inlet piping into rotational power which drives certain equipment used very often for cleaning processes, if water as a power medium is used. The drawback of all above described solutions is the fact that the torsional moment on the shaft is accompanied by extremely high shaft rotating speed which is not always suitable for final use, and therefore the speed of rotation must be considerably reduced by gearing. Simultaneously principally there is a limit to the reductions of the basic hydromotor unit the main wheel, which transforms the energy of the water flow into the torsional moment, because the reduction in the size of this main wheel also increases its rotational speed and reduces the torsional moment thus making the gearing system progressively more complicated.

From the Czech patent application PV972-97 and from the international patent application WO98/17910, there is known a fluid rolling machine consisting of a chamber provided with an inlet for fluid inflow and at least one outlet hole, before which is placed a holding device supporting a rolling rotor which consists of a body of rotational shape.

The aim of the solution is to modify this fluid rolling machine in such a way that it may be in the best possible way suitable for driving rotating tools.

### Disclosure of Invention

The mentioned aim is achieved by means of a hydraulic motor, especially for driving rotating tools, consisting of a chamber provided with an inlet for supplying of liquid and with at least one outlet hole, before which, on a holding device, a rolling rotor is seated, the rolling rotor is formed by a body of a rotational shape, according to this invention, the principle of which resides in the fact that the chamber is at least in its internal surface of a rotational shape and of a tapering diameter, and the chamber is open on its side of the maximum diameter, and limited by a wall on its side of the minimum diameter. In the middle of said wall is provided a hole, through which a shaft passes with a clearance. The shaft carries the rolling rotor. The shaft is provided, inside the chamber, with a recess, the diameter of which is larger than the diameter of the hole in the wall. Several outlet holes are arranged round the hole in the wall.

The hydraulic motor according to this technical solution needs no gearing for achieving operational speed of rotation, suitable for driving rotating tools, and its size may be considerably smaller than with known embodiments, while still having the required torsional moment.

According to an advantageous embodiment, the rolling rotor can have a shape of a hollow and open hemisphere which is fixed onto the shaft by its open side against the liquid flow.

According to another advantageous embodiment, the chamber has, at least on its internal surface, a shape of a truncated cone of a lateral area under the slope of 4 to 8°.

According to another embodiment, an adapter for clamping exchangeable tools is arranged on the end of the shaft which protrudes from the chamber.

To make the handling easier, it is advantageous, if in the chamber, on the side of its maximum diameter, a handle is fixed, onto which the inlet for the liquid supply is connected, and in the handle a control valve for controlling the liquid flow is provided.

According to another embodiment, axes of outlet holes in the walls of the chamber may be deflected from the longitudinal axis of the hydraulic motor, and in the jacket of the chamber there can be made additional outlet holes, and the inlet of liquid is formed by a flexible hose.

According to a further embodiment, the chamber may be seated coaxially in an additional jacket which is terminated with a rotating nozzle connected to the shaft.

The chamber may be also enclosed in a case, through the face wall of which a shaft passes, being fluid-tightly sealed, and the case is provided with an outlet for draining liquid.

According to various advantageous embodiments, the exchangeable tool may be represented by a brush head cleaner, or brush, or sponge, or drill, or milling cutter ,or grater, or abrasive stone, or massage adapter, or mixing adapter.

### Brief Description of Drawings

The hydraulic motor according to the invention will be described in details on particular embodiments showed on drawings where individual drawings illustrate:
Fig. 1 - Hydraulic motor with an adapter for clamping exchangeable tools
Fig. 2 - Hydraulic motor with a handle and a set of exchangeable tools
Fig. 3 - Hydraulic motor adapted for cleaning piping
Fig. 4 - Hydraulic motor with a rotating nozzle
Fig. 5 - Hydraulic motor in a tightened case with a liquid outlet

### Modes for Carrying Out the Invention

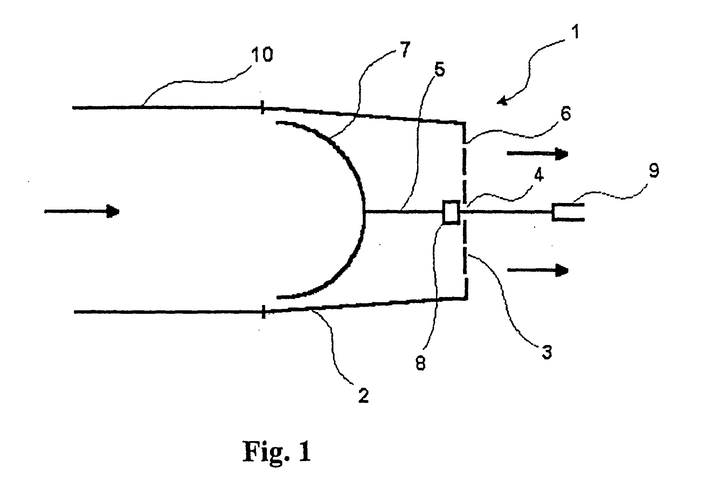

On Fig. 1, the first example embodiment of a hydraulic motor 1 for driving rotating tools by means of water from water-supply piping is illustrated. The hydraulic motor consists of a chamber 2 being shaped as a truncated cone with the lateral area, having a slope of 7°. On the side of a larger diameter, the chamber 2 is open and a flexible hose of an inlet 10 for supplying liquid is connected to it. On the opposite side, the chamber 2 is closed by means of a wall 3, in the middle of which there is made a hole 4 for a shaft 5 and concentrically outlet holes 6 of the liquid. The hole 4 for the shaft 5 has such a diameter and shape that it may enable not only a rotation of the shaft 5 but its swinging as well. The shaft 5 is provided inside the chamber 2 with a recess 8, the diameter of which is larger than the diameter of the hole 4 in the wall 3. Onto the shaft 5 inside the chamber 2, a rolling rotor 7 is fixed. The rotor 7 can heve an arbitrary rotational shape. A hollow hemisphere, open against the liquid flow, proved to be an advantageous shape for the described embodiment. The end of the shaft 5 which protrudes from the chamber 2 is provided with an adapter 9 for clamping exchangeable tools.

After opening an unshown valve, water flows though the inlet 10 into the chamber 2, from which it flows out through outlets 6. By the water flow, the rotor 7, by means of a recess 8, made on the shaft 5, leans against the wall 3,and at the same time it starts rolling along the circumferential jacket of the chamber 2. The end of the shaft 5, with an adapter 9 protruding from the chamber 2, starts to rotate and simultaneously follows a path of a small circle. The fact that the difference between the maximum diameter of the rotor 7 and the diameter of the chamber 2 in the place of the rotor 7 rolling path is usually not larger than 1 mm, the shaft 5 swing is negligible for the intended application.

As to the described embodiment example of the hydraulic motor 1, revolutions of the shaft 5, at the water flow through the hydraulic motor at the rate of about 0,17 to 0,2 l/s, may be expected within about 420 to 450 rpm. Water pressure in the inlet 10 for supplying water should be between 2.4 up to 3.6 kPa.

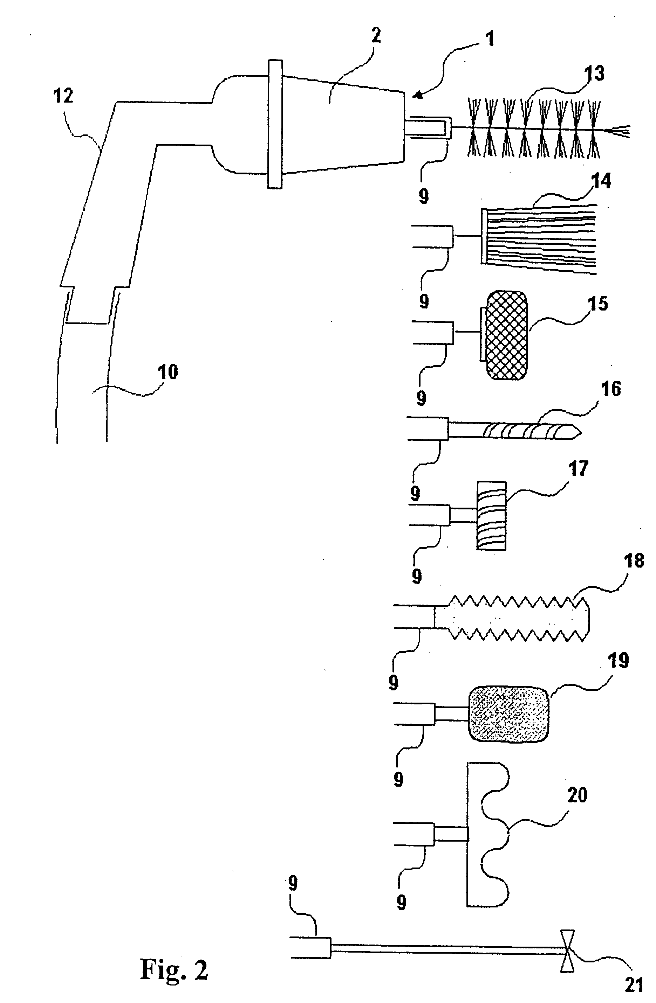

Fig. 2 shows another embodiment of the hydraulic motor 1 which differs from the embodiment shown on Fig. 1 only by that, between the chamber 2 and the inlet 10 for liquid supplying liquid, there is mounted a handle 12, provided with a built-in control valve for controlling the liquid flow. It can be a normally available manual garden sprayer, connectable to a hose. Fig. 2 also shows an example of a set of exchangeable tools, for example a brush head cleaner 13, a brush 14, a sponge 15, a drill 16, a milling cutter 17, a grater 18, an abrasive stone 19, a massage adapter 20 and a mixing adapter 21.

The function of the embodiment shown on Fig. 2 is the same as of the embodiment shown on Fig. 1. As it is evident from the above indicated exchangeable tools, this embodiment may be applied to cleaning, grinding, polishing, drilling, milling and mixing materials, and also for a body massaging.

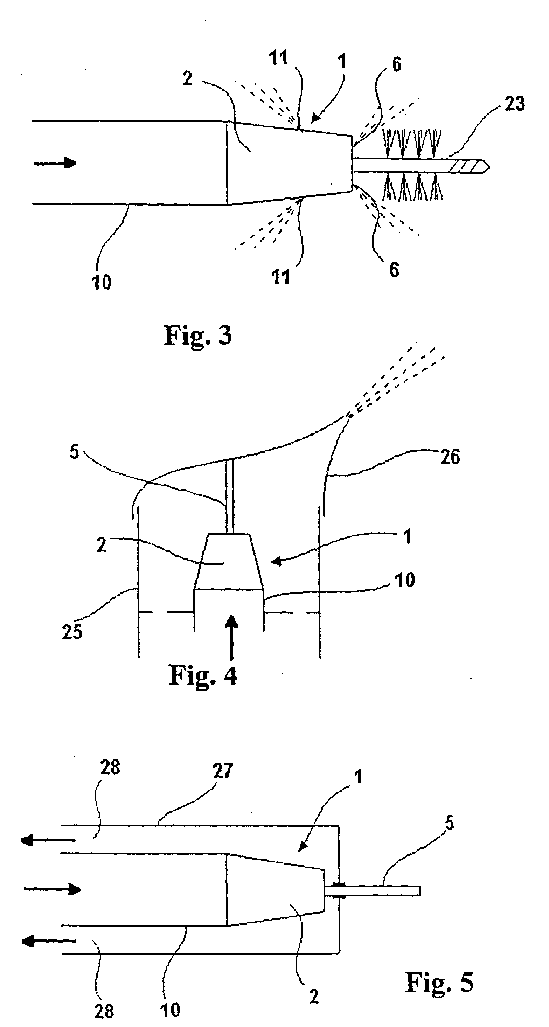

On Fig.3 there is illustrated an embodiment of the hydraulic motor 1 for cleaning piping. The inlet 10 is represented by flixible hose, and outlets 6 made in the wall 3 of the chamber 2 have their axes declined from the longitudinal axis of the hydraulic motor for directing the liquid flow to the internal wall of the piping being cleaning. For the same reason there are made, in the jacket of the chamber 2, additional outlet holes 11. The shaft 5 is terminated with a push-cleaning tool 23.

After putting the hydraulic motor 1 into the piping being cleaned, this piping is cleaned both with a water flow the outlet holes 6 in the wall 3 of the chamber 2, from additional outlet holes 11 in the jacket of the chamber 2, and by rotation of the push-cleaning tool 23.

On Fig.4 there is illustrated the hydraulic motor 1 provided with a rotating nozzle 26 for spraying gardens or fields. The chamber 2 and the hydraulic motor 1 are seated coaxially in an additional jacket 25 which is closed, on its top, by the rotating nozzle 26, connected to the shaft 5 of the hydraulic motor 1.

Water is supplied not only into the chamber 2 where it rotates the shaft 5 and the rotating nozzle 26, but also into the additional jacket 25 of the hydraulic motor 1 for increasing the water flow.

For some applications it is advantageous, if the liquid is draind from the hydraulic motor 1 outside the working space which makes it possible to ulize the hydraulic motor 1 also for dry working processes.

An example of such an embodiment is illustrated on Fig.5. The chamber 2 of the hydraulic motor 1 is enclosed in a case 27, through the face wall of the which the shaft 5, sealed against the liquid penetration, is passing. The case 27 is provided with an outlet 28 for draining liquid outside the working space.

Such an embodiment of the hydraulic motor 1 may be applied e.g. as a drill, a grinder, a winding equipment, a mixing equipment, a mixer, a drive of an electric power generator or pump, a polisher, a planer, a circular saw, a screw driver, a tightener, a rotational tooth brush, a milling machine, a hydraulic drive of machine parts, and the like.

### Industrial Applicability

The hydraulic motor according to the technical solution can be applied in connection with respective brushes for cleaning, when applying water, as a manual washing set, at which it is possible easily to change various types of brushes. Said application may be carried out both in industry and in households, in gardens, in firms and institutions supplying various services, and it may concern a cleaning of tools and implements, working aids, sanitary ceramics and aids, ceramic lining, kitchen crockery, coachworks, car bodies and other transport vehicles and their engines, and the like. Needed water pressure may be at the level of pressure which is usually supplied by water-supply piping. When applying said usual pressure or a higher pressure, the hydraulic motor may be applied as a driving unit in connection with respective adapters for cleaning building facades, for cleaning gaps, fissures and breakings in concrete, bituminous and similar surfaces, for washing and cleaning various kinds of pavement and lining-surfacing materials, for cleaning windows, and the like.

This hydraulic motor may be also applied for cleaning piping, if it is connected to a flexible hose and provided with respective push cleaning tools. If it is provided with a massage adapter, it may serve as a massage shower in cooperation with a rotation mechanical massaging. More over it can be applied as a driving unit for specialized machines and tools, e.g. for treating stone, cutting and drilling into a stone, concrete and similar materials and surfaces, where water is a suitable accompanying medium, for polishing surfaces of various materials and surfaces, and the like. It can be also applied at the end of an irrigation piping and for spraying of irrigation water. It is also possible to apply it as manual tools under a water surface, e.g. for driving tools, for screw tightening, for drilling, cutting, grinding, and the like. It may also serve as a driving unit for child's toys in pools/baths and toys connected to water-supply piping, because due to its design it can be suitably dimensioned with respect to the safety point of view. It may be also applied in a closed liquid circuit, and to serve in this way as a liquid motor, eventually servomotor anywhere, where it is not suitable or necessary to use liquid for certain working or technological process.

## Claims

1. A hydraulic motor, especially for driving of rotating tools, consisting of a chamber (2) provided with an inlet (10) for supplying fluid, and with at least one outlet hole (6), before which, on a holding device, a rolling rotor (7) is seated, the rolling rotor (7) is formed by a body of rotational shape, **characterized in that** the chamber (2) is at least in its internal surface of rotational shape and of a tapering diameter, and the chamber (2) is on its side of the maximum diameter open, and on the side of its minimum diameter limited by means of a wall (3), in the middle of which a hole (4) is provided, through which a shaft (5) passes with a clearance, the shaft (5) carrying the rolling rotor (7), and the shaft (5) inside the chamber (2) is provided with a recess (8), the diameter of which is larger than the diameter of the hole (4) in the wall (3).

2. The hydraulic motor as in Claim 1, **wherein** the rolling rotor (7) has a shape of a hollow and open hemisphere which is fixed onto the shaft (5) with its open side against the liquid flow.

3. The hydraulic motor as in Claim 1 or 2, **wherein** the chamber (2) has, at least on its internal surface, a shape of a truncated cone of a lateral area under the slope of 4 to 8°.

4. The hydraulic motor as in any of the previous Claims, **wherein** at the end of the shaft (5) which protrudes from the chamber (2), an adapter (9) for clamping exchangeable tools is arranged.

5. The hydraulic motor as in any of the previous Claims, **wherein** to the chamber (2), on the side of the maximum diameter, there is connected a handle (12), to which the inlet (10) for the liquid supply is connected, and in the handle (12) a control valve for controlling the liquid flow is provided.

6. The hydraulic motor as in any of the previous Claims 1 to 4, **wherein** axes of the outlet holes (6) in the wall (3) of the chamber (2) are deflected from the longitudinal axis of the hydraulic motor, and in the jacket of the chamber (2) there are made additional outlet holes (11), and the inlet (10) of liquid is formed by a flexible hose.

7. The hydraulic motor as in any of the previous Claims 1 to 4, **wherein** the chamber (2) is coaxially seated in an additional jacket (25) which is terminated by a rotating nozzle (26), connected to the shaft (5).

8. The hydraulic motor as in any of the previous Claims 1 to 4, **wherein** the chamber (2) is enclosed in a case (27), through the face wall of which the shaft (5) passes, being fluid-tightly sealed, and the case (27) is provided with an outlet (28) for draining the liquid.

9. The hydraulic motor as in the Claim 4 **wherein** the exchangeable tool is represented by a brush head cleaner (13), a brush (14), a sponge (15), a drill (16), a milling cutter (17), a grater (18), an abrasive stone (19), a massage adapter (20) or a mixing adapter (21).

## Patentansprüche

1. Hydraulikmotor, insbesondere für einen Antrieb von sich drehenden Werkzeugen, bestehend aus einer Kammer (2), die mit einem Einlass (10) für die Zufuhr von Fluid vorgesehen ist, und mit wenigstens einer Ausgangsöffnung (6), vor der an einer Halteeinrichtung ein Wälzrotor (7) aufgenommen ist, wobei der Wälzrotor (7) von einem rotationsförmigen Körper gebildet wird, **dadurch gekennzeichnet, dass** die Kammer (2) wenigstens an ihrer Innenfläche rotationsförmig ist und einen sich verjüngenden Durchmesser aufweist, und die Kammer (2) auf ihrer Seite maximalen Durchmessers offen ist und auf der Seite ihres minimalen Durchmessers durch eine Wand (3) begrenzt ist, in deren Mitte eine Öffnung (4) vorgesehen ist, durch die eine Welle (5) mit einem Spiel hindurchgeht, wobei die Welle (5) den Wälzrotor (7) trägt, und die Welle (5) innerhalb der Kammer (2) mit einer Aussparung (8) vorgesehen ist, deren Durchmesser größer ist als der Durchmesser der Öffnung (4) in der Wand (3).

2. Hydraulikmotor nach Anspruch 1, **bei dem** der Wälzrotor (7) die Form einer hohlen und offenen Halbkugel aufweist, die an der Welle (5) so angebracht ist, dass ihre offene Seite der Flüssigkeitsströmung zugewandt ist.

3. Hydraulikmotor nach Anspruch 1 oder 2, **bei dem** die Kammer (2) wenigstens an ihrer Innenfläche die Form eines Kegelstumpfes aufweist, dessen Seitenbereich 4° bis 8° geneigt ist.

4. Hydraulikmotor nach einem der vorhergehenden Ansprüche, **bei dem** am Ende der Welle (5), das aus der Kammer (2) vorsteht, ein Adapter (9) zum Klemmen austauschbarer Werkzeuge angeordnet ist.

5. Hydraulikmotor nach einem der vorhergehenden Ansprüche, **bei dem** ein Handgriff (12) auf der Seite des maximalen Durchmessers mit der Kammer (2) verbunden ist, an den der Einlass (10) für die Flüssigkeitszufuhr angeschlossen ist, und in dem Handgriff (12) ein Steuerventil zur Steuerung der Flüssigkeitsströmung vorgesehen ist.

6. Hydraulikmotor nach einem der vorhergehenden Ansprüche 1 bis 4, **bei dem** die Achsen der Auslassöffnungen (6) in der Wand (3) der Kammer (2) von der Längsachse des Hydraulikmotors abweichen, und in dem Mantel der Kammer (2) zusätzlich Auslassöffnungen (11) gemacht sind und der Einlass (10) für die Flüssigkeit von einem flexiblen Schlauch gebildet wird.

7. Hydraulikmotor nach einem der vorhergehenden Ansprüche 1 bis 4, **bei dem** die Kammer (2) koaxial in einem zusätzlichen Mantel (25) aufgenommen ist, der in einer Drehdüse (26) endet, die mit der Welle (5) verbunden ist.

8. Hydraulikmotor nach einem der vorhergehenden Ansprüche 1 bis 4, **bei dem** die Kammer (2) in einem Gehäuse (27) enthalten ist, durch dessen Stirnwand die Welle (5) hindurchgeht, wobei sie flüssigkeitsdicht abgedichtet ist, und das Gehäuse (27) mit einem Auslass (28) für eine Abfuhr der Flüssigkeit versehen ist.

9. Hydraulikmotor nach Anspruch 4, **bei dem** das austauschbare Werkzeug von einem Bürstenkopfreiniger (13), einer Bürste (14), einem Schwamm (15), einem Bohrer (16), einem Fräswerkzeug (17), einem Abschaber (18), einem Schleifstein (19), einem Massageadapter (20) oder einem Mischadapter (21) gebildet wird.

## Revendications

1. Moteur hydraulique, en particulier pour l'entraînement d'outils rotatifs, comprenant une chambre (2) équipée d'une entrée (10) pour délivrer un fluide, et avec au moins un trou de sortie (6), en amont duquel est fixé un rotor rotatif (7) sur un dispositif de fixation, le rotor rotatif (7) est formé par un corps de forme rotative, **caractérisé en ce que** la chambre (2) est au moins dans sa surface interne de forme rotative et d'un diamètre dégressif, et la chambre (2). est ouverte du côté de son diamètre maximum, et du côté de son diamètre minimum limitée par une paroi (3), au milieu de laquelle un trou (4) est pratiqué, dans lequel passe un arbre (5) avec jeu, l'arbre (5) supportant le rotor rotatif (7), et l'arbre (5) à l'intérieur de la chambre (2) est équipé d'un évidement (8), dont le diamètre est plus grand que le diamètre du trou (4) dans la paroi (3).

2. Motor hydraulique selon la revendication 1, dans lequel le rotor rotatif (7) a la forme d'une demi-sphère creuse et ouverte qui est fixée sur l'arbre (5) avec son côté ouvert vers l'écoulement de liquide.

3. Moteur hydraulique selon la revendication 1 ou 2, dans lequel la chambre (2) a, au moins sur sa surface interne, la forme d'un tronc de cône d'une surface latérale sous la boucle de 4 à 8°.

4. Moteur hydraulique selon l'une quelconque des revendications précédentes, dans lequel à l'extrémité de l'arbre (5) qui fait saillie de la chambre (2), est monté un adaptateur (9) pour fixer des outils échangeables.

5. Moteur hydraulique selon l'une quelconque des revendications précédentes, dans lequel à la chambre (2), du côté du diamètre maximum, est fixée une poignée (12), à laquelle est raccordée l'entrée (10) pour l'alimentation en liquide, et une vanne de commande pour réguler l'écoulement de liquide est installée dans la poignée (12).

6. Moteur hydraulique selon l'une quelconque des revendications 1 à 4, dans lequel les axes des trous de sortie (6) dans la paroi (3) de la chambre (2) sont déviés de l'axe longitudinal du moteur hydraulique, et dans l'enveloppe de la chambre (2) se trouvent des trous de sortie supplémentaires (11), et l'entrée (10) de liquide est formée par un tuyau flexible.

7. Moteur hydraulique selon l'une quelconque des revendications 1 à 4, dans lequel la chambre (2) est placée coaxialement dans une enveloppe supplémentaire (25) qui se termine par une buse rotative (26) connectée à l'arbre (5).

8. Moteur hydraulique selon l'une quelconque des revendications 1 à 4, dans lequel la chambre (2) est enfermée dans un carter (27), dont la paroi frontale est traversée par l'arbre (5), étant étanchéisée, et le carter (27) est doté d'une sortie (28) pour drainer le liquide.

9. Motor hydraulique selon la revendication 4, dans lequel l'outil échangeable est représenté par un nettoyeur de tête de brosse (13), une brosse (14), une éponge (15), une perceuse (16), une fraise (17), un grattoir (18), une pierre abrasive (19), un adaptateur de massage (20) ou un adaptateur de mélange (21).
